# EUROPEAN PATENT SPECIFICATION

(11) **EP 1 090 054 B1**
(45) Date of publication and mention of the grant of the patent: **14.08.2002**
(21) Application number: 99935216.4
(22) Date of filing: 18.06.1999
(51) Int. Cl.: C08G 18/08, C08G 18/66, C08G 18/80, D21H 17/57

(54) **IONIC POLYURETHANES**
IONISCHE POLYURETHANE
POLYURETHANNES IONIQUES

(30) Priority: 24.06.1998 US 90507 P; 24.06.1998 EP 98850112
(43) Date of publication of application: 11.04.2001
(73) Proprietor: AKZO NOBEL N.V., 6800 SB Arnhem (NL); Eka Chemicals AB, 445 80 Bohus (SE)
(72) Inventor: BIERMANN, Christian, D-52349 Düren (DE); MACHEREY, Heribert, D-52372 Kreuzau (DE); GORZYNSKI, Marek, D-52349 Düren (DE)
(74) Representative: Jönsson, Christer
(86) International application number: SE9901113
(87) International publication number: WO9967310

(56) References cited:
- EP-A- 0 268 806
- WO-A-96/38629
- WO-A-96/40811
- US-A- 4 096 127

## Description

This invention relates to charged polyurethanes, aqueous dispersions of charged polyurethanes, a process for their preparation and their use as additives in the manufacture of paper.

It is known in the art to use charged polyurethanes as external and internal sizing agents in the manufacture of paper. For instance, U.S. Pat. No. 3,971,764 discloses sizing agents based on cationic polyurethanes prepared by (i) reacting an aliphatic diol having an aliphatic substituent with at least 10 carbon atoms with a polyisocyanate to form a prepolymer with terminal isocyanate groups which is subsequently reacted with (ii) a diol containing a tertiary nitrogen atom which is subsequently converted into the corresponding ammonium compound, or (iii) a diol containing a nitrogen atom previously converted into the corresponding ammonium compound. Similarly, U.S. Pat. No. 4,096,127 discloses sizing agents based on anionic polyurethanes prepared by step (i) above followed by reacting the obtained prepolymer with (iv) an aliphatic diol containing an acid group capable of salt formation and at least partially converting the acid group into a salt by reaction with a base, or (v) an aliphatic diol which carries a salt group. U.S. Pat. No. 4,777,224, also discloses sizing agents based on anionic polyurethanes prepared by steps (i), (iv) and (v) above and with the additional use of a polyether compound with at least one OH group. Polyurethanes of these types generally result in good sizing response using low dosages of sizing agent. However, there is still a need for sizing agents based on charged polyurethanes with improved sizing, stability and application properties.

It is accordingly an object of this invention to provide charged polyurethanes and aqueous dispersions thereof with improved sizing, stability and application properties. Further objects will appear hereinafter. The objects of the invention are achieved by a process for the production of charged polyurethanes, charged polyurethanes obtainable by the process, aqueous dispersions of charged polyurethanes and the use thereof, as further defined in the claims.

The present invention relates to a process for the production of charged polyurethanes which comprises reacting a polyisocyanate with alcohols comprising (i) a first alcohol selected from one or more diols containing at least 10 carbon atoms; (ii) a second alcohol selected from alkylene diols and alkyleneoxy diols containing not more than 8 carbon atoms, polyols, and mixtures thereof; (iii) a third alcohol selected from (a) diols containing a charged group or atom, (b) diols containing an uncharged group or atom capable of charge formation and at least partially converting the uncharged group or atom into a charged group or atom, (c) polyols and further reaction with a compound containing a charged group or atom or a compound containing an uncharged group or atom capable of charge formation and at least partially converting the uncharged group or atom into a charged group or atom, and mixtures thereof.

The present invention generally relates to a process for the production of charged polyurethanes and charged polyurethanes obtainable by the process. The process comprises reacting isocyanate groups of a polyisocyanate with hydroxyl groups of di- and/or polyhydric alcohols comprising (i) a first alcohol selected from one or more diols containing at least 10 carbon atoms; (ii) a second alcohol selected from alkylene diols containing not more than 8 carbon atoms, alkyleneoxy diols containing not more than 8 carbon atoms, polyols, with at least three hydroxyl groups and mixtures thereof; (iii) a third alcohol selected from (a) diols containing a charged group or atom, (b) diols containing an uncharged group or atom capable of charge formation and at least partially converting the uncharged group or atom into a charged group or atom, (c) polyols and further reaction of one or more hydroxyl groups of the polyol with a compound containing a charged group or atom or a compound containing an uncharged group or atom capable of charge formation and at least partially converting the uncharged group or atom into a charged group or atom, and mixtures thereof.

Charged polyurethanes encompassed by this invention comprises polyurethanes containing anionic and/or cationic groups, thereby forming anionic, amphoteric and cationic polyurethanes. According to the present invention there is provided anionic, amphoteric and cationic polyurethanes with outstanding properties. Aqueous dispersions of the present charged polyurethanes provide improved sizing which means that lower levels of sizing agent can be used to give a corresponding sizing effect, thereby leading to cost reduction and economic benefits. Further characteristics observed with the dispersions of charged polyurethanes of this invention include less foaming, very good or improved stability, compatibility, glueability, sizing response and coating performance over a broad pH range and when used in surface sizing, precoating and coating applications in combination with conventionally used components, e.g. electrolytes, starch and derivatives thereof, pigments, other synthetic polymers, etc., as well as improved toner adhesion and ink jet properties.

The process of this invention can be carried out in several ways. It is possible to react the polyisocyanate with the first, second and third alcohols simultaneously, i.e. in a so-called one-shot process. For instance, this mode of operation can be employed when using as the third alcohol (b) a diol containing an uncharged group or atom capable of charge formation, where charge formation suitably takes place when the polyurethane has been formed. However, it is generally preferred to carry out the process as a two-step or three-step process, for example by introducing the alcohols one after another into the process for reaction. The terms "one-shot process", "two-step process" and "three-step process", as used herein, refers to processes where the alcohols are introduced into the reaction medium for reaction essentially simultaneously, in two steps and in three steps, respectively. Running the process in at least two steps makes it possible to react the polyisocyanate with the alcohol(s) initially introduced into the reaction medium so as to form a preliminary adduct or prepolymer with isocyanate group(s), usually in a terminal position, and chain-lengthening the preliminary adduct by reaction with the alcohol(s) subsequently introduced into the reaction medium, the latter alcohol(s) functioning as a chain-extender, or chain-lengthening agent, or branching agent. Preferably the first and second alcohols are introduced into the process for reaction before introducing the third alcohol into the process. The first alcohol can be introduced into the process before, simultaneously with or after the second alcohol. In a preferred embodiment of the invention, the polyurethane is prepared by reacting the polyisocyanate with the first alcohol to form a preliminary adduct having terminal isocyanate groups; chain-lengthening the preliminary adduct by reaction with the third alcohol, and optionally convertion of any uncharged groups or atoms as defined above, so as to render the polyurethane charged, wherein the second alcohol in the course of the process is introduced for reaction, for example as defined above. Generally, when using a third alcohol of the type (b) or (c), which requires one or more additional reaction steps in order to introduce a charged group or atom, it is generally preferred to prepare the polyurethane by first reacting the isocyanate groups of the polyisocyanate with the hydroxyl groups of the first, second and third alcohol, and then conducting any additional step(s), e.g. reacting the product obtained with a compound containing an uncharged group or atom capable of charge formation and converting an uncharged group or atom into a charged group or atom. However, such additional step(s) may also be carried out earlier in the process, for example before introducing the last alcohol into the process.

In the process of this invention, the alcohol termed "first alcohol" is a diol, or dihydric alcohol, containing at least 10 carbon atoms. The first alcohol can be selected from aliphatic and aromatic diols, preferably aliphatic diols. The term "aliphatic", as used herein, refers to an essentially hydrocarbon structure apart from designated functional groups, which hydrocarbon structure may be interrupted by one or more heteroatoms, e.g. oxygen and nitrogen, and/or one or more groups containing heteroatoms, e.g. carbonyl and acyloxy groups. The term "aromatic", as used herein, refers to an aromatic, essentially hydrocarbon structure apart from designated functional groups, which hydrocarbon structure may be interrupted by one or more heteroatoms, e.g. oxygen and nitrogen, and/or one or more groups containing heteroatoms, e.g. carbonyl and acyloxy groups. Suitable first alcohols include high molecular weight polymeric diols, e.g. polyester, polyether and polybutadiene diols, and non-polymeric diols, preferably non-polymeric diols. Preferred first alcohols include aliphatic diols having an aliphatic side-chain substituent. Aliphatic diols carrying an aliphatic substituent may contain from 2 to 20 and suitably from 2 to 10 carbon atoms in the chain connecting the two hydroxyl groups, i.e. in the main chain, and preferred aliphatic main chains include alkylenes and dialkyleneamines. The aliphatic substituent may contain from 1 to 30, suitably at least 10 and preferably from 10 to 22 carbon atoms. Preferred first alcohols are thus selected from aliphatic diols having an aliphatic substituent with at least 10 carbon atoms. When the main chain contains a heteroatom which is nitrogen, it is preferred that the nitrogen carries the aliphatic substituent. Examples of suitable first alcohols include fatty acid monoesters of triols such as glycerol, trimethylolethane and trimethylolpropane, e.g. monostearates, monobehenates, monopalmitates and monooleates of glycerol and trimethylolpropane; oligomeric esterdiols such as diester diols, e.g. those obtained by reacting a dicarboxylic acid, e g. adipic acid, with a molar excess of a diol, e.g. ethylene glycols; N-alkyl-diethanolamines, e.g. N-stearyl-diethanolamine; branched chain dihydroxy alkylenes, e.g. 1,2- and 1,4-dihydroxyoctadecanes; and N,N-bis(hydroxyalkyl)-alkylamides, e.g. N,N-bis(β-hydroxyethyl)stearylamide. Glycerol monostearate is particularly preferred. Examples of aromatic diols that can be used include bisphenol A. Mixtures comprising two or more first alcohols can also be used.

In the process of this invention, the alcohol termed "second alcohol" can be a low molecular weight diol, or dihydric alcohol, having not more than 8 carbons. The diol can be selected from alkylene diols, e.g. ethylene glycol, propylene glycol, 1,4-butanediol and 1,6-hexanediol; alkyleneoxy diols, e.g. diethylene glycol, triethylene glycol, tetraethylene glycol and dipropylene glycol; and mixtures thereof. Preferred diols include ethylene glycol and diethylene glycol. The diols suitably contain from 2 to 6 carbon atoms and preferably from 2 to 4 carbon atoms. Alternatively, or additionally, the alcohol termed "second alcohol" can be a polyol, or polyhydric alcohol, i.e. an alcohol with at least three hydroxyl groups. Preferably the polyol is aliphatic. Usually the polyol contains from 3 to 10 carbon atoms, notably not more than 8 carbons. Suitable polyols include glycerol, diglycerol, trimethylol ethane, trimethylol propane, and pentaerythritol. Preferred polyols include glycerol, trimethylol propane and pentaerythritol. Among the polyols, it is generally preferred to use triols and tetraols. preferably triols. The second alcohol should suitably be free from charged groups and atoms and also free from groups and atoms capable of charge formation.

In the process of this invention, the alcohol termed "third alcohol" is a diol, or dihydric alcohol, which is charged or capable of charge formation, or a polyol, or polyhydric alcohol, capable of further reaction and, optionally, subsequent charge formation. Mixtures of third alcohols can also be used. Preferably the third alcohol is an aliphatic compound. It is further generally preferred that the third alcohol is a diol. In a prefered embodiment of the invention, the process leads to the formation of a polyurethane which is anionic in nature. In another preferred embodiment of the invention, the process leads to the formation of a polyurethane which is cationic in nature. In yet another preferred embodiment of the invention, the process leads to the formation of an amphoteric polyurethane which, in turn, may be anionic or cationic in nature.

Accordingly, the third alcohol can be selected from (a) a diol containing a charged group or atom, i.e. an anionic or cationic group or atom. In the process, after reaction with the polyisocyanate or a preliminary adduct having isocyanate group(s), this type of diol produces a charged prepolymer or polyurethane. Examples of anionic groups or atoms that can be present in the diol include carboxylate, phosphate and sulfonate groups, preferably carboxylates, which can be obtained by neutralizing a diol having a carboxylic acid or sulfonic acid group, such as the monoester reaction products of triols (usually trimethylolethane, trimethylolpropane, glycerol) and dicarboxylic acids or anhydrides thereof (usually succinic acid or anhydride, terephthalic acid or anhydride) like glycerol monosuccinate, glycerol monoterephthalate, trimethylolpropane monosuccinate, trimethylolpropane monoterephthalate, N,N-bis-(hydroxyethyl)-glycine, di-(hydroxymethyl)propionic acid, N,N-bis-(hydroxyethyl)-2-aminoethanesulfonic acid, and the like, by reaction with a base, such as an alkali metal hydroxide, e.g. sodium hydroxide, or an amine, e.g. triethylamine, thereby forming an alkali metal or ammonium counter-ion. Examples of cationic groups or atoms that can be present in the diol include cationically charged sulfur, phosphorous and nitrogen, e.g. in the form of sulfonium groups, phosphonium groups and ammonium groups like acid addition salts of primary, secondary and tertiary amino groups and quaternary ammonium groups, preferably ammonium groups and most preferably acid addition salts of tertiary amino groups and quaternary ammonium groups. Examples of suitable cationic diols (a) include acid addition salts and quaternization products of N-alkandiol dialkylamines and N-alkyl dialkanolamines like 1,2-propanediol-3-dimethylamine, N-methyl diethanolamine, N-ethyl diethanolamine, N-propyl diethanolamine, N-n-butyl diethanolamine and N-t-butyl diethanolamine, N-stearyl diethanolamine and N-methyl dipropanolamine, preferably N-alkyl diethanolamines in which the alkyl groups contain 1 to 4 carbon atoms, in particular N-methyl diethanolamine. The acid addition salts can be derived from acids, such as formic acid, hydrochloric acid, sulfuric acid, etc., and the quatemization products can be derived from alkylating agents like methyl chloride, dialkyl sulfates, e.g. dimethyl sulfate, benzyl halides, e.g. benzyl chloride, epihalohydrins, e.g. epichlorohydrin, and alkylene oxides, e.g. ethylene oxide and propylene oxide. Examples of suitable diols containing a cationic group are disclosed in Internat. Pat. Appl. Publ. No. WO 97/45395 and US Pat. No. 5,561,187, the teachings of which are hereby incorporated herein by reference.

Alternatively, or additionally, the third alcohol can be selected from (b) a diol containing an uncharged group or atom capable of charge formation. In the process, after reaction with the polyisocyanate or a preliminary adduct having isocyanate group(s), this type of diol produces an uncharged prepolymer or polyurethane which is then further reacted in order to produce a charged polyurethane by partially or wholly converting the uncharged groups or atoms derived from the diol (b) into charged groups or atoms. The third alcohol of (b) can be a diol containing a group or atom that can be rendered anionic by reaction with a base. Examples of suitable uncharged groups or atoms of this type include acid groups like sulfonic acid, phosphoric acid and carboxylic acid groups, usually a carboxylic acid group. The anionic charge can be formed by neutralizing the acid group present in the polyurethane by reaction with a base, such as alkali metal hydroxide, e.g. sodium hydroxide, or an amine, e.g. triethylamine, thereby forming an alkali metal or ammonium counter-ion. Suitable non-ionic diols (b) that are potentially anionic include the monoester reaction products of triols (usually trimethylolethane, trimethylolpropane, glycerol) and dicarboxylic acids or anhydrides thereof (usually succinic acid or anhydride, terephthalic acid or anhydride) like glycerol mcnosuccinate, glycerol monoterephthalate, trimethylolpropane monosuccinate and trimethylolpropane monoterephthalate, as well as N,N-bis-(hydroxyethyl)-glycine, di-(hydroxymethyl)-propionic acid, N,N-bis-(hydroxyethyl)-2-aminoethanesulfonic acid, and the like. Alternatively, the second alcohol of (b) can be a diol containing a group or atom which can be rendered cationic by reaction with an acid or an alkylating agent. Examples of suitable uncharged groups or atoms of this type include sulfur and nitrogen atoms, e.g. in the form of sulfide and amine groups, preferably a nitrogen atom, where the nitrogen can be present as a primary, secondary or tertiary amino group, preferably a tertiary amino group. The cationic charge can be formed by reacting the uncharged groups or atoms present in the polyurethane with an acid and/or alkylating agent, thereby forming cationic groups or atoms, such as sulfonium and ammonium groups, e.g. in the form of acid addition salts (protonated nitrogens) and quatematy ammmonium groups (quaternized nitrogens). Examples of suitable non-ionic diols (b) that are potentially cationic include N-alkandiol dialkylamines and N-alkyl dialkanolamines like 1,2-propanediol-3-dimethylamine, N-methyl diethanolamine. N-ethyl diethanolamine, N-propyl diethanolamine, N-n- and N-t-butyl diethanolamines, N-stearyl diethanolamine and N-methyl dipropanolamine, preferably N-alkyl diethanolamines in which the alkyl groups contain 1 to 4 carbon atoms, in particular N-methyl diethanolamine. Suitable acids include formic acid, hydrochloric acid, sulfuric acid, and the like. Suitable alkylating agents include methyl chloride, dialkyl sulfates, e.g. dimethyl sulfate, benzyl halides, e.g. benzyl chloride, epihalohydrins, e.g. epichlorohydrin, and alkylene oxides, e.g. ethylene oxide and propylene oxide.

The third alcohol can also be selected from (c) a polyol. If this type of third alcohol is used, it is generally preferred that the first and second alcohols have already been introduced into the process and thereby formed a preliminary adduct having terminal isocyanate group(s) in order that the polyol (c) can function as a chain-extender by reaction with the preliminary adduct to form a polyurethane as well as a reactant for further reaction with a compound (d) which is reactive to hydroxyl groups and contains or introduces a charged group or atom, or an uncharged group or atom capable of charge formation. In the process, when the polyol (c) has been incorporated into the polyurethane by reaction with a preliminary adduct having isocyanate group(s), at least one remaining hydroxyl group derived from the polyol is reacted with the compound (d) and, optionally, any uncharged groups or atoms capable of charge formation derived from the compound (d) are then at least partially converted into charged groups or atoms. Usually the polyol (c) contains from 3 to 10 carbon atoms, notably not more than 8 carbons. Suitable polyols (c) include glycerol, diglycerol, trimethylol ethane, trimethylol propane, and pentaerythritol. Preferred polyols include glycerol, trimethylol propane and pentaerythritol. Among the polyols, it is preferred to use triols and tetraols, preferably triols. Suitable compounds (d) include dicarboxylic acids, dicarboxylic anhydrides and dicarboxylic acid chlorides, preferably dicarboxylic acids and anhydrides, most preferably anhydrides. Suitable dicarboxylic acids, anhydrides and acid chlorides can be selected from aliphatic and/or aromatic compounds containing at least 2 carbon atoms, preferably from 4 to 10 carbon atoms, e.g. succinic acid and anhydride, glutaric acid and anhydride, maleic acid and anhydride, as well as phthalic acid and anhydride. When using a dicarboxylic acid or anhydride, the reaction with a hydroxyl group of the polyol (c) leads to formation of a carboxyl group which can be converted into the corresponding carboxylate group by reaction with a base, such as an alkali metal hydroxide, e.g. sodium hydroxide, or an amine, e.g. triethylamine. Accordingly, the use of the third alcohol (c) and the compound (d) usually produce anionic groups which may be present in anionic and amphoteric polyurethanes.

If the third alcohol is a polyol (c), it is generally preferred that the second alcohol is selected from diols. However, if the third alcohol is a polyol (c) and the second alcohol is also a polyol, it is preferred that they are different polyols. Polyisocyanates that can be used in the process of this invention include aliphatic, aromatic and mixed aliphatic/aromatic compounds. The term "polyisocyanate", as used herein, refers to a compound with at least two isocyanate groups. Among the polyisocyanates, it is generally preferred to use diisocyanates. Where polyisocyanates containing more than two isocyanate groups are used, e.g. triisocyanates, it is preferred to admix them with diisocyanates. Polyisocyanates generally are known in the art, for example as disclosed in Encyclopedia of Polymer Science and Engineering, Vol. 13, Second Ed., 1988, pp. 243-303, which is hereby incorporated herein by reference. Examples of suitable diisocyanates include toluene-2,4- and 2,6-diisocyanates, diphenylmethane-4,4'-diisocyanate, hexamethylene diisocyanate, dicyclohexylmethane-4,4'-diisocyanate, cyclohexane-1,4-diisocyanate, isophorone diisocyanate and the like. It is also possible to use blocked isocyanates in known manner.

In the present process, the molar ratio of hydroxyl groups of the first, second and third alcohols to isocyanate groups of the polyisocyanate can vary within wide limits depending on, for example, type of alcohols used, type of polyisocyanate used, etc. Usually, the molar ratio of hydroxyl groups to isocyanate groups is within the range of from 0.5:1 to 2:1, suitably from 0.7:1 to 1.3:1 and preferably about 0.9:1 to 1.1:1.

Generally the proportions between the first, second and third alcohols used according to the invention can vary within wide limits. The process is usually carried out using from about 1 to about 80 mole% of (I) hydroxyl groups of the first alcohol, from about 1 to about 75 mole% of (II) hydroxyl groups of the second alcohol and from about 20 to about 90 mole% of (III) hydroxyl groups of the third alcohol, the sum of percentages of (I) + (II) + (III) being 100; suitably (I) is from 5 to 70 mole%, (II) is from 2 to 65 mole% and (III) is from 25 to 70 mole%; and preferably (I) is from 10 to 60 mole%, (II) is from 3 to 50 mole% and (III) is from 25 to 60 mole%. In a preferred embodiment, the first alcohol is used in a predominant amount such that the molar ratios of (I) hydroxyl groups of the first alcohol to (II) hydroxyl groups of the second alcohol and to (III) hydroxyl groups of the third alcohol are both greater than 1:1. Usually these products give improved sizing efficiency.

The process of this invention can be carried out in conventional manner, for example as disclosed in U.S. Pat. Nos. 3,971,764, 4,096,127, 4,617,341, 4,777,224 and 5,561,187, and Internat. Pat. Appl. Publ. No. WO 97/45395, the teachings of which are incorporated herein by reference, except that different reactants are used in this process. As isocyanates are susceptible to nucleophilic attack and readily react with water, the process is preferably carried out in a reaction medium free from water and undesired nucloephiles. Suitably the reaction is carried out in a water-free inert organic solvent, e.g. acetone, optionally in the presence of a catalyst, e.g. diacetoxy-dibutyl-tin. After completed reaction, any further reaction can be carried out and the reaction medium can be worked-up in conventional manner. Examples of useful steps include addition of water, acid, and/or alkali; evaporation of solvent, and the like. Acid and alkali are often added, for formation of charged groups in the polyurethane. The polyurethane obtained should suitably be watersoluble or water-dispersable, and water can thus be added for formation of an aqueous polyurethane dispersion. Usually the polyurethane produced has an average molecular weight of at least 500, suitably at least 1,000.

The present invention further relates to the aqueous dispersion of charged polyurethane and the use thereof as an additive in the manufacture of paper. The dispersions may contain from about 1 to 50% by weight of polyurethane, suitably from 5 to 25% by weight. The dispersion may of course be diluted with water prior to use. The term "paper", as used herein, refers to all types of cellulosic products, including paper, board and paper board.

In a preferred embodiment, the polyurethane dispersion is used as a sizing agent. The dispersion can be added to the paper making stock (internal sizing agent) or applied to the paper surface (external sizing agent), preferably to surface size paper. In addition to the charged polyurethane, the aqueous composition used for surface sizing, commonly referred to as sizing liquor, usually contains starch or a derivative thereof. Pigments may be present in certain applications. The amount of polyurethane added to the stock or applied to the paper surface may be from 0.001 to 25% by weight, calculated as dry charged polyurethane on dry cellulosic material and optional filler, suitably from 0.01 to 5% by weight. In another preferred embodiment, the dispersion is used as a component of a coating or precoating composition, usually for coating paper. The present coating composition may contain any of the pigments conventionally used in coating and pre-coating compositions including, for example, kaolin, titanium dioxide, calcium carbonate, chalk, aluminum oxide, aluminium silicate, satin white, barium sulfate, silica, talk, calcium sulfate, zink oxide, zirkonium carbonate, magnesium carbonate, the contents of which are usually at least 20% by weight, based on the coating composition. The amount of dispersion of charged polyurethane present in the coating composition can be from 0.01 to 25% by weight, suitably from 0.01 to 8% by weight, calculated as dry polyurethane on dry coating composition. The amount of coating composition comprising charged polyurethane applied to the paper surface may be within the ranges described above, calculated as dry charged polyurethane on dry cellulosic material and optional filler.

The present invention further relates to a process for surface-treating a material in sheet or web form, e.g. paper or polymeric film, by applying to the surface of the material a composition, e.g. an aqueous composition, comprising the charged polyurethane described herein, and optionally drying the surface-treated material thus obtained. The composition, which can be a surface sizing composition, a pigment coating composition, etc., is suitably applied to the surface in amounts described above, calculated as dry polyurethane on dry material in sheet or web form.

The invention is further illustrated in the following non-limiting examples. Parts and percentages relate to parts by weight and percent by weight, respectively, unless otherwise stated.

### Example 1

A charged polyurethane according to the invention was prepared as follows: 60.0 ml (420 mmol) of toluene diisocyanate (hereinafter TDI) were added to a solution of 73.1 g (204 mmol) of glycerol monostearate (hereinafter GMS) in 200 g of acetone. The mixture was heated under reflux for 1 h in the presence of a catalytic amount of dibutyl-tin-diacetate. Next, 3.76 g (40.8 mmol) of glycerol were added and heating continued. 35 min later, 17.3 g (129 mmol) of di-(hydroxymethyl)-propionic acid (hereinafter DMPA) and 1.70 g (14.3 mmol) of N-methyl-diethanolamine (hereinafter N-MDEA) in 200 g acetone were added. The reaction mixture was heated under reflux for additional 1 h and then treated with 116 ml of 1 M NaOH (aq) and 1000 ml water. The acetone was evaporated in vacuum yielding an aqueous dispersion of anionic polyurethane.

### Example 2

A charged polyurethane according to the invention was prepared essentially as in Example 1 except that TDI was added to an acetonic solution of both GMS and glycerol. After heating under reflux for 70 min, DMPA and N-MDEA were added as above followed by heating the reaction mixture under reflux for additional 2 h. The reaction mixture was worked-up as in Example 1, yielding an aqueous dispersion of anionic polyurethane.

### Example 3

A charged polyurethane according to the invention was prepared essentially as in Example 1 except that 5.0 g (54.3 mmol) of glycerol, 14.8 g (110 mmol) of DMPA, 1.46 g (12.3 mmol) of N-MDEA and 100 ml of 1 M NaOH were used. Working-up the reaction mixture yielded an aqueous dispersion of anionic polyurethane.

### Example 4

A charged polyurethane according to the invention was prepared essentially as in Example 1 except that glycerol was replaced with 3.8 g (61.2 mmol) of ethyleneglycol. Working-up the reaction mixture yielded an aqueous dispersion of anionic polyurethane.

### Example 5

A charged polyurethane according to the invention was prepared essentially as in Example 1 except that glycerol was replaced with 5.5 g (61.2 mmol) of 1,4-butanediol. Working-up the reaction mixture yielded an aqueous dispersion of anionic polyurethane.

### Example 6

A charged polyurethane according to the invention was prepared essentially as in Example 1 except that glycerol was replaced with 7.2 g (61.2 mmol) of 1,6-hexanediol. Working-up the reaction mixture yielded an aqueous dispersion of anionic polyurethane.

### Example 7

A charged polyurethane according to the invention was prepared essentially as in Example 1 except that glycerol was replaced with 4.7 g (61.2 mmol) of 1,2-propanediol. Working-up the reaction mixture yielded an aqueous dispersion of anionic polyurethane.

### Example 8

A charged polyurethane according to the invention was prepared essentially as in Example 1 except that glycerol was replaced with 4.2 g (30.6 mmol) of pentaerythritol. Working-up the reaction mixture yielded an aqueous dispersion of anionic polyurethane.

### Example 9

For comparison purposes, a charged polyurethane was prepared following the procedure according to Example 1 except that no glycerol was used and the amounts of DMPA, N-MDEA and 1 M NaOH were 24.6 g (183 mmol), 2.43 g (20.4 mmol) and 165 ml, respectively. Working-up the reaction mixture yielded an aqueous dispersion of anionic polyurethane.

### Example 10

For comparison purposes, a charged polyurethane was prepared according to the teachings of U.S. 4,777,224, as follows: 15 ml (105 mmol) of TDI were added to a solution of 18.3 g (51.0 mmol) of GMS in 50 g of acetone. The mixture was heated under reflux for 1 h in the presence of a catalytic amount of dibutyl-tin-diacetate. Next, 2.85 g (21.2 mmol) of DMPA, 2.58 g (21.7 mmol) of N-MDEA in 50 g acetone and 13.8 g (6.89 mmol) of polyethylene glycol with an average molecular weight of 2000 were added. The reaction mixture was heated under reflux for additional 90 min and then treated with 14.4 ml of 1 M NaOH (aq) and 250 ml water. The acetone was evaporated in vacuum yielding an aqueous dispersion of anionic polyurethane.

### Example 11

A charged polyurethane according to the invention was prepared as follows: 15 ml (105 mmol) of TDI were added to a solution of 18.3 g (51.0 mmol) of GMS in 50 g of acetone. The mixture was heated under reflux for 1 h in the presence of a catalytic amount of dibutyl-tin-diacetate. Next, 0.94 g (10.2 mmol) of glycerol were added and heating continued. 25 min later, 1.97 g (7.65 mmol) of N-MDEA quaternized with epichlorohydrin (a hydroxy-functional quatarnary ammonium compound prepared according to the teachings of WO 97/45395; hereinafter N-MDEA-ECH) and subsequently 3.34 g (28.1 mmol) of N-MDEA in 50 g acetone were added. The temperature was increased and the reaction mixture was heated under reflux for 50 min. The resulting acetonic solution was poured into 27 ml of 1 M HCI (aq) and 250 ml water. Acetone was removed in vacuum giving an aqueous dispersion of cationic polyurethane.

### Example 12

A charged polyurethane according to the invention was prepared essentially as in Example 11 except that no N-MDEA-ECH was used and the amounts of N-MDEA and 1 M HCI were increased to 4.26 g (35.7 mmol) and 34 ml, respectively. The product obtained was an aqueous dispersion of cationic polyurethane.

### Example 13

For comparison purposes, a charged polyurethane was prepared following the procedure according to Example 11 except that no glycerol was used and the amounts of N-MDEA and 1 M HCI were increased to 5.17 g (43.4 mmol) and 39 ml, respectively. The product obtained was an aqueous dispersion of cationic polyurethane.

### Example 14

For comparison purposes, a charged polyurethane was prepared following the procedure according to Example 12 except that no glycerol and no N-MDEA-ECH were used and the amounts of N-MDEA and 1 M HCI (aq) were increased to 6.08 g (51.0 mmol) and 48.5 ml, respectively. The product obtained was an aqueous dispersion of cationic polyurethane.

### Example 15

Sizing efficiency of the anionic polyurethane dispersions according to Examples 1-10 was evaluated by means of the Cobb test, using German DIN standard 5312 which is a common method in the art. The Cobb₆₀ values correspond to paper absorption of water, expressed in g/m² of water take-up after 1 min contact time.

Sizing liquor containing the polyurethane dispersion was applied with a laboratory size press to an unsized base paper. The sizing liquor also contained 5% of oxidatively degraded starch.

The values measured on the sized paper sheets are presented in Table 1, where dosage of the polyurethane dispersion (in %) refers to dry anionic polyurethane on dry paper.

**Table 1**

| Polyurethane Dispersion used | Cobb₆₀ | | | |
|---|---|---|---|---|
| | 0.075 % | 0.10 % | 0.15 % | 0.2 % |
| Example No. 1 | - | 24 | 22 | 21 |
| Example No. 2 | 40 | 28 | 25 | 23 |
| Example No. 3 | - | 26 | 22 | 21 |
| Example No. 4 | - | 35 | 23 | 21 |
| Example No. 5 | - | 33 | 23 | 22 |
| Example No. 6 | - | 36 | 24 | 21 |
| Example No. 7 | - | 62 | 26 | 23 |
| Example No. 8 | - | 24 | 22 | 20 |
| Example No. 9 (comparison) | 88 | 75 | 34 | 28 |
| Example No. 10 (comparison) | - | 85 | 31 | 25 |

As can be seen from Table I, the sizing efficiency of the polyurethane dispersions of Examples 1 to 8 according to the invention showed significant improved sizing efficiency over polyurethane dispersion of Examples 9 and 10 used for comparison.

### Example 16

Sizing efficiency of the cationic polyurethane dispersions according to Examples 11-14 was evaluated as in Example 15. The results are presented in Table 2, where dosage of the polyurethane dispersion (in %) refers to dry cationic polyurethane on dry paper.

**Table 2**

| Polyurethane Dispersion used | Cobb₆₀ | |
|---|---|---|
| | 0.10 % | 0.15 % |
| Example No. 11 | 61 | 25 |
| Example No.12 | 79 | 27 |
| Example No. 13 (comparison) | 82 | 33 |
| Example No. 14 (comparison) | 88 | 45 |

As can be seen from Table 2, the sizing efficiency of the polyurethane dispersion of Examples 11 and 12 according to the invention showed significant improved sizing efficiency over poiyurethane dispersion of Exampies 13 and 14 used for comparison.

## Claims

1. A process for the production of charged polyurethanes comprising reacting isocyanate groups of a polyisocyanate with hydroxyl groups of different alcohols comprising
(i) a first alcohol selected from one or more dials containing at least 10 carbon atoms;
(ii) a second alcohol selected from alkylene diols having not more than 8 carbon atoms, alkyleneoxy diols having not more than 8 carbon atoms, polyols with at least three hydroxyl groups, and mixtures thereof;
(iii) a third alcohol selected from (a) diols containing a charged group or atom, (b) diols containing an uncharged group or atom capable of charge formation and at least partially converting the uncharged group or atom into a charged group or atom, (c) polyols and further reaction of one or more hydroxyl group derived from the polyol with a compound containing a charged group or atom or a compound containing an uncharged group or atom capable of charge formation and at least partially converting said uncharged group or atom into a charged group or atom, and mixtures thereof.

2. A process for the production of charged polyurethanes according to claim 1, **characterised in that** the second alcohol is selected from polyols containing from 3 to 10 carbon atoms.

3. A process for the production of charged polyurethanes according to claim 1 or 2, **characterised in that** in the production of anionic polyurethanes, the first alcohol is an aliphatic diol having an aliphatic side-chain substituent having at least 10 carbon atoms.

4. A process for the production of charged polyurethanes according to claim 1, 2 or 3, **characterised in that** the polyurethane is anionic.

5. A process for the production of charged polyurethanes according to claim 1, 2 or 3, **characterised in that** the polyurethane is cationic.

6. A process for the production of charged polyurethanes according to claim 1, 2 or 3, **characterised in that** the polyurethane is amphoteric.

7. A process according to any of the preceding claims, **characterised in that** the third alcohol is selected from (a) diols containing a charged group or atom, (b) diols containing an uncharged group or atom capable of charge formation, and mixtures thereof.

8. A process according to any of the preceding claims, **characterised in that** the first and second alcohols are introduced into the process for reaction before introducing the third alcohol.

9. A process according to any of the preceding claims, **characterised in that** (I) the first alcohol is an aliphatic diol having an aliphatic substituent with at least 10 carbon atoms; (ii) the second alcohol is selected from diols, triols, tetraols, and mixtures thereof; and (ii) the third alcohol is selected from N-alkandiol dialkylamines, acid addition salts thereof and quaternization products thereof, N-alkyl dialkanolamines, acid addition salts thereof and quatemization products thereof, diols containing a carboxylic acid group, diols containing a carboxylate group, diols containing a sulfonic acid group, diols containing a suffonate group, and mixtures thereof.

10. A process according to any of the preceding claims, **characterised In that** the process is carried out using from 10 to 60 mole% of (I) hydroxyl groups of the first alcohol, from 3 to 50 mole% of (II) hydroxyl groups of the second alcohol and from 25 to 60 mole% of (III) hydroxyl groups of the third alcohol, the sum of percentages of (I) + (II) + (III) being 100.

11. Charged polyurethane obtainable by a process according to any one of claims 1 to 10.

12. Aqueous dispersion containing a charged polyurethane according to claim 11 or containing a charged polyurethane produced according to any of claims 1 to 10.

13. A method of surface-treating a material in sheet or web form by applying a composition to the surface of the material, **characterised in that** the composition comprises a charged polyurethane according to claim 11 or an aqueous dispersion containing a charged polyurethane according to claim 12.

14. A method according to claim 13, **characterised in that** the material in sheet or web form is a cellulosic product.

15. A method according to claim 13 or 14, **characterised in that** it is a surface sizing method which is carried out using an aqueous sizing composition.

16. A method according to claim 13 or 14, **characterised in that** it is a paper coating method which is carried out using an aqueous pigmented composition.

## Patentansprüche

1. Verfahren zur Herstellung von geladenen Polyurethanen, umfassend die Umsetzung von Isocyanatgruppen eines Polyisocyanats mit Hydroxylgruppen unterschiedlicher Alkohole, umfassend
(i) einen ersten Alkohol, ausgewählt aus einem oder mehreren Diolen, die mindestens 10 Kohlenstoffatome enthalten;
(ii) einen zweiten Alkohol, ausgewählt aus Alkylendiolen mit nicht mehr als 8 Kohlenstoffatomen, Alkylenoxydiolen mit nicht mehr als 8 Kohlenstoffatomen, Polyolen mit mindestens drei Hydroxylgruppen, und Gemischen davon;
(iii) einen dritten Alkohol, ausgewählt aus (a) Diolen, die einen geladenen Rest oder ein geladenes Atom enthalten, (b) Diolen, die einen nicht geladenen Rest oder ein nicht geladenes Atom enthalten, die zur Ladungsbildung und mindestens teilweise Umwandlung des ungeladenen Rests oder Atoms in einen geladenen Rest oder Atom in der Lage sind, (c) Polyolen, und weitere Umsetzung von einer oder von mehreren von dem Polyol abgeleiteten Hydroxylgruppen mit einer Verbindung, die einen geladenen Rest oder Atom enthalten, oder einer Verbindung, die einen nicht geladenen Rest oder Atom enthalten, die zur Ladungsbildung und mindestens teilweise Umwandlung des nicht geladenen Rests oder Atoms in einen geladenen Rest oder Atom fähig sind, und Gemischen davon.

2. Verfahren zur Herstellung von geladenen Polyurethanen nach Anspruch 1, **dadurch gekennzeichnet, dass** der zweite Alkohol aus Polyolen ausgewählt ist, die 3 bis 10 Kohlenstoffatome enthalten.

3. Verfahren zur Herstellung von geladenen Polyurethanen nach Anspruch 1 oder 2, **dadurch gekennzeichnet, dass** bei der Herstellung anionischer Polyurethane der erste Alkohol ein aliphatisches Diol mit einem aliphatischen Seitenkettensubstituenten mit mindestens 10 Kohlenstoffatomen ist.

4. Verfahren zur Herstellung von geladenen Polyurethanen nach Anspruch 1, 2 oder 3, **dadurch gekennzeichnet, dass** das Polyurethan anionisch ist.

5. Verfahren zur Herstellung von geladenen Polyurethanen nach Anspruch 1, 2 oder 3, **dadurch gekennzeichnet, dass** das Polyurethan kationisch ist.

6. Verfahren zur Herstellung von geladenen Polyurethanen nach Anspruch 1, 2 oder 3, **dadurch gekennzeichnet, dass** das Polyurethan amphoter ist.

7. Verfahren nach einem der vorstehenden Ansprüche, **dadurch gekennzeichnet, dass** der dritte Alkohol ausgewählt ist aus (a) einen geladenen Rest oder Atom enthaltenden Diolen, (b) Diolen, die einen zur Ladungsbildung fähigen geladenen Rest oder Atom enthalten, und Gemischen davon.

8. Verfahren nach einem der vorstehenden Ansprüche, **dadurch gekennzeichnet, dass** der erste und zweite Alkohol in das Verfahren zur Umsetzung vor Einbringen des dritten Alkohols eingebracht werden.

9. Verfahren nach einem der vorstehenden Ansprüche, **dadurch gekennzeichnet, dass**
(i) der erste Alkohol ein aliphatisches Diol mit einem aliphatischen Substituenten mit mindestens 10 Kohlenstoffatomen ist; (ii) der zweite Alkohol ausgewählt ist auch Diolen, Triolen, Tetraolen und Gemischen davon; und (iii) der dritte Alkohol ausgewählt ist aus N-Alkandioldialkylaminen, Säureadditionssalzen davon und Quaternisierungsprodukten davon, N-Alkyldialkanolaminen, Säureadditionssalzen davon und Quaternisierungsprodukten davon, eine Carbonsäuregruppe enthaltenden Diolen, eine Carboxylatgruppe enthaltenden Diolen, eine Sulfonsäuregruppe enthaltenden Diolen, eine Sulfonatgruppe enthaltenden Diolen und Gemischen davon.

10. Verfahren nach einem der vorstehenden Ansprüche, **dadurch gekennzeichnet, dass** das Verfahren unter Verwendung von 10 bis 60 mol-% (i) Hydroxylgruppen des ersten Alkohols, 3 bis 50 mol-% (ii) Hydroxylgruppen des zweiten Alkohols und 25 bis 60 mol-% (iii) Hydroxylgruppen des dritten Alkohols durchgeführt wird, wobei die Summe der Prozentsätze von (i) + (ii) + (iii) 100 ist.

11. Geladenes Polyurethan, erhältlich mit einem Verfahren nach einem der Ansprüche 1 bis 10.

12. Wässrige Dispersion, die ein geladenes Polyurethan nach Anspruch 11 oder ein nach einem der Ansprüche 1 bis 10 hergestelltes geladenes Polyurethan enthält.

13. Verfahren zur Oberflächenbehandlung eines Materials in Form eines Flächengebildes oder in Vliesform durch Aufbringen einer Zusammensetzung auf die Oberfläche des Materials, **dadurch gekennzeichnet, dass** die Zusammensetzung ein geladenes Polyurethan nach Anspruch 11 oder eine ein geladenes Polyurethan enthaltende wässrige Dispersion nach Anspruch 12 umfasst.

14. Verfahren nach Anspruch 13, **dadurch gekennzeichnet, dass** das Material in Form eines Flächengebildes oder in Vliesform ein Celluloseprodukt ist.

15. Verfahren nach Anspruch 13 oder 14, **dadurch gekennzeichnet, dass** das Oberflächenbehandlungsverfahren unter Verwendung einer wässrigen Oberflächenbehandlungszusammensetzung durchgeführt wird.

16. Verfahren nach Anspruch 13 oder 14, **dadurch gekennzeichnet, dass** es ein Papierbeschichtungsverfahren ist, das unter Verwendung einer wässrigen pigmentierten Zusammensetzung durchgeführt wird.

## Revendications

1. Procédé de préparation de polyuréthannes chargés, comprenant le fait de faire réagir les groupes isocyanate d'un polyisocyanate avec les groupes hydroxyle de différents alcools comprenant
(i) un premier alcool choisi parmi un ou plusieurs diols contenant au moins 10 atomes de carbone,
(ii) un second alcool choisi parmi les alkylènediols ne comportant pas plus de 8 atomes de carbone, les alkylèneoxydiols ne comportant pas plus de 8 atomes de carbone, les polyols comportant au moins trois groupes hydroxyle, et les mélanges de tels alcools,
(iii) un troisième alcool choisi parmi
(a) les diols contenant un groupe ou atome chargé,
(b) les diols contenant un groupe ou atome non chargé capable de former une charge, et la conversion, au moins partielle, du groupe ou atome non chargé en groupe ou atome chargé,
(c) les polyols,
et de faire réagir ensuite un ou plusieurs groupes hydroxyle du polyol avec un composé contenant un groupe ou atome chargé ou avec un composé contenant un groupe ou atome non chargé capable de former une charge, et de convertir au moins partiellement ledit groupe ou atome non-chargé en groupe ou atome chargé, et des mélanges de ceux-ci.

2. Procédé de préparation de polyuréthannes chargés selon la revendication 1, **caractérisé par le fait que** le second alcool est choisi parmi les polyols contenant de 3 à 10 atomes de carbone.

3. Procédé de préparation de polyuréthannes chargés selon la revendication 1 ou 2, **caractérisé par le fait que**, lors de la préparation de polyuréthannes anioniques, le premier alcool est un diol aliphatique avec un substituant aliphatique comportant au moins 10 atomes de carbone.

4. Procédé de préparation de polyuréthannes chargés selon la revendication 1, 2 ou 3, **caractérisé par le fait que** le polyuréthanne est anionique.

5. Procédé de préparation de polyuréthannes chargés selon la revendication 1, 2 ou 3, **caractérisé par le fait que** le polyuréthanne est cationique.

6. Procédé de préparation de polyuréthannes chargés selon la revendication 1, 2 ou 3, **caractérisé par le fait que** le polyuréthanne est amphotère.

7. Procédé selon l'une quelconque des revendications précédentes, **caractérisé par le fait que** le troisième alcool est choisi parmi (a) les diols contenant un atome ou groupe chargé, (b) les diols contenant un groupe ou atome non chargé capable de former une charge, et les mélanges de ceux-ci.

8. Procédé selon l'une quelconque des revendications précédentes, **caractérisé par le fait que** l'on introduit le premier et second alcool dans le procédé pour les faire réagir avant l'introduction du troisième alcool.

9. Procédé selon l'une quelconque des revendications précédentes, **caractérisé par le fait que**
(I)le premier alcool est un diol aliphatique portant un substituant aliphatique comportant au moins 10 atomes de carbone,
(II) le deuxième alcool est choisi parmi les diols, triols, tétraols et des mélanges de ceux-ci, et
(III) le troisième alcool est choisi parmi les N-alcanedioldial-kylamines, les sels d'addition d'acide et les produits de quaternisation de celles-ci, les N-alkyldialcanolamines, les sels d'addition d'acide et les produits de quaternisation de celles-ci, les diols contenant un groupe acide carboxylique, les diols contenant un groupe acide sulfonique, les diols contenant un groupe sulfonate et des mélanges de ceux-ci.

10. Procédé selon l'une quelconque des revendications précédentes, **caractérisé par le fait que** l'on met en oeuvre le procédé en utilisant de 10 à 60 % en moles (I) de groupes hydroxyle du premier alcool, de 3 à 50 % en moles de (II) groupes hydroxyle du second alcool et de 25 à 60 % en moles de (III) groupes hydroxyle du troisième alcool, la somme des pourcentages de (I) + (II) + (III) étant égale à 100.

11. Polyuréthanne chargé susceptible d'être obtenu selon l'une quelconque des revendications 1 à 10.

12. Dispersion aqueuse contenant un polyuréthanne chargé selon la revendication 11, ou contenant un polyuréthanne chargé préparé selon l'une quelconque des revendications 1 à 10.

13. Procédé de traitement de surface d'un matériau sous forme de feuille ou de nappe, consistant à appliquer une composition sur la surface du matériau, **caractérisé par le fait que** la composition comprend un polyuréthanne chargé selon la revendication 11 ou une dispersion aqueuse contenant un polyuréthanne chargé selon la revendication 12.

14. Procédé selon la revendication 13, **caractérisé par le fait que** le matériau sous forme de feuille ou de nappe est un produit cellulosique.

15. Procédé selon la revendication 13 ou 14, **caractérisé par le fait qu'**il s'agit d'un procédé d'encollage de la surface réalisé à l'aide d'une composition d'encollage aqueuse.

16. Procédé selon la revendication 13 ou 14, **caractérisé par le fait qu'**il s'agit d'un procédé de couchage du papier réalisé avec une composition pigmentée aqueuse.
